# EUROPEAN PATENT APPLICATION

(11) **EP 2 587 054 A2**
(43) Date of publication of application: **01.05.2013**
(21) Application number: 12186970.5
(22) Date of filing: 02.10.2012
(51) Int. Cl.: F03D 11/00

(54) **Wind Turbine comprising a Cable Loop**

(30) Priority: 26.10.2011 DK 201170585
(71) Applicant: Envision Energy (Denmark) ApS, 8600 Silkeborg (DK)
(72) Inventor: Moestrup, Henning, 8800 Viborg (DK)
(74) Representative: Gregersen, Niels Henrik

(57) **Abstract**

A wind turbine (1) having a number of cables (5), e.g. electrical power cables, extending from a nacelle (2) and down into a tower (3), where the cables (5)are arranged in a cable loop construction (6), said cable loop construction comprising a number of cable spacers (7) comprising a number of fingers (18) extending in a radial direction at said cable spacer, thus forming a number of gaps between said fingers. By having a cable spacer comprising a number of fingers the power cables can be arranged more or less loose or uncoupled between two such fingers. This leaves the cables free to relieve themselves from stresses when they are twisted as the nacelle is yawing in relation to the tower. Thus the cables will always be able to minimize the stresses induced by twisting, as they are not rigidly fixed to a ring or the like.

## Description

### Field of the Invention

The present invention relates to a wind turbine comprising at least a nacelle, said nacelle being installed on top of a generally vertical tower via a yaw bearing, where said yaw bearing offers the possibility of turning said nacelle in relation to said tower, said wind turbine further having a number of cables, e.g. electrical power cables, extending from said nacelle and down into said tower, where the cables are arranged in a cable loop construction, said cable loop construction comprising a number of cable spacers, where the cable spacers comprise a number of fingers, said fingers extending in a substantially radial direction from a first position/diameter to an outer circumference/second diameter at said cable spacer, thus forming a number of gaps between said fingers, where said fingers on said cable spacer are extending outwardly from a circumference of a centre part.

### Background of the Invention

It is well known to connect electrical cables, to e.g. a generator, a converter or other electrical equipment in a nacelle on a modem wind turbine. Such cables normally extend on the inside of a tower hanging from the nacelle and towards the bottom of the tower. As the nacelle has to be able to make an azimuth movement also known as a yaw movement in relation to the tower these cables has to be able to withstand some twisting and/or pulling. By arranging the cables in the centre of the tower, pulling in the cable is minimized and twisting becomes the most important issue. Typically cables will be arranged along the circumference of some kind of ring or frame and as the cables twist they tend to take a helical shape, which will create a certain pull in the cables as the helical shape of the twisted cables needs some length compared to a straight cable.

To overcome the problem with the needed extra length it is common to use what is called a cable loop at the bottom of the hanging cables. The cable loop simply consists of an over length of cable hanging more or less loose to compensate for the twist of the bundle of cables.

The cables are typically hanging in a so-called cable stocking from the main structure at the nacelle and in the centre of the tower as mentioned. The cable stocking is a fixture installed on/around the cable and is fitted with a kind of eyelet in which the cable can be hanging.

Typically cable loops are designed to be able to work with a twist of ± 720 degrees. If the twist of the cables is over the limit, the wind turbine will be stopped, and the nacelle will be rotated into e.g. a 0 degree position thus untwisting the cables. In modem wind turbines such a function is typically programmed into the overall control system and will be executed without further human effort.

From WO 2010/105852 A2 a solution as described above is known. A number of cables are hanging from the main structure at the nacelle. The cables are situated in the centre of the tower and are arranged in small bundles at the inside as well as on the outside periphery of a number of circular rings. The cables are fixed to said rings with common equipment for fastening cables, i.e. the cables are arranged in a fixed manner to said circular rings. The lowermost ring is arranged in a kind of suspension allowing the ring to move up and down as the cables are twisted and untwisted, but it is fixed for rotation together with the cables.

As the cables are fixed to said rings there will be a bend below the ring and above the ring in the cables when they are twisted, which over time will destroy the cable that will have to be replaced, with down time and high costs as a consequence.

Also WO 2010/108538 A1 discloses a solution for handling cables in a wind turbine tower. This however is a different principle as the cables are installed in a number of plates and the lower most of the plates is fixed against rotation as well as against movement up and down. Thus the cables will be sliding in and out of apertures in said plates, which quickly will wear out the insulation around the conducting material on the cables. This problem is to some extend addressed by preparing the plates with apertures, where the edges of these apertures are rounded off, but as the individual cables are twisted they will be forced towards these edges, and they will wear and fail such that a short circuit might appear. A further disadvantage with the solution disclosed in WO 2010/108538 A1 is that the cables have to be installed from the bottom up or from the top down by guiding each and every cable through a number of apertures in the plates. This is a troublesome and time-consuming process and thus also expensive.

Another problem with the solution disclosed in WO 2010/108538 is getting rid of heat emitted from the cables because they are arranged in small bundles relatively close to each other at a small diameter. The reason for having a small diameter of the plates is believed to be an attempt to minimize the distance the cables have to travel up and down during twisting. A smaller plate or ring diameter demands less travel of the cables and vice versa. A smaller diameter of the ring or plates will also have influence on the deformation of and stresses in the cables, which will be higher with a small diameter. Furthermore, the bundle of cables will be more compact at a smaller diameter, and less heat will be moved by convection.

CN 202004388 U discloses a circular cable spacer for a wind turbine having a number of fingers extending in a radial direction from a circumference of a centre part to an outer circumference of the spacer. Between said fingers there are gaps for accommodating cables. Said fingers has a length of less that the diameter of the cables and the cables are fixed in the gaps by a clamping band that presses and holds the cables in a stressed position. Further the surfaces, where the cables are in contact with the cable spacer are with sharp edges, and as the set of cables when twisted will minimise the diameter, and so to say takes the shape of an hour glass, the insulation of the cables will be damaged and eventually fail. Further when fixating the cables to the cable spacer there will be a bending of the cables at both sides of the cables spacer which also will damage the cable over time.

CN 201568227 U discloses a similar cable spacer comprising fingers, for holding cables in position. Also this solution possesses the drawbacks with wear and bending as discussed above. Further this solution has to be installed piece by piece in order to arrange the cables between the fingers. Even further the fingers on the outermost circumference only have a depth of less than the diameter of the cables and the cables are neither held nor fixed in position between the fingers.

The diameter of a cable loop structure and the distance or compactness of the cables will always be a balance that has to be considered.

### Object of the Invention

It is an object of the invention to provide a cable loop construction for a wind turbine, where the cables are supported, and where twisting of the cables will happen without any noticeable movement between the respective cables and the support structure, and where installation is simple.

### Description of the Invention

As mentioned above the invention relates to a wind turbine having a number of cables, e.g. electrical power cables extending from a nacelle and down into a tower, where the cables are arranged in a cable loop construction, said cable loop construction comprising a number of cable spacers. The cable spacers comprise a number of fingers, said fingers extending in a substantially radial direction from a first position/diameter to an outer circumference/second diameter at said cable spacer, thus forming a number of gaps between said fingers. In this context the term fingers is to be understood as projecting parts e.g. as impeller blades on an open impeller or the like. The term fingers does not by itself form the basis for the shape of said fingers, but only explains that said fingers are extending from a central part and that they are pointing in a radial direction and away from said central part.

By having a cable spacer comprising a number of fingers the power cables and other types of cables can be arranged more or less loose or uncoupled in a room between two such fingers. This leaves the cables free to relieve themselves from stresses when they are twisted as the nacelle is yawing in relation to the tower. Thus the cables will always be able to minimize the stresses induced by twisting, as they are not rigidly fixed to a ring or the like. According to the invention the cables are arranged in a kind of open space, where they to some extent are fixed, but still they are free to move, as the cables are supported and guided by the cable spacer. Furthermore, the cable spacer has the function to keep a certain distance between the cables to minimize the temperature, that otherwise can rise and become problematic. The temperature depends a great deal on how the different cables are arranged in relation to each others, but keeping the cables at a distance will keep the cables at acceptable temperatures even when the wind turbine is producing its maximum at high ambient temperatures.

A wind turbine according to the invention will preferably be fitted with approximately fourteen cable spacers arranged along a number of cables with approximately one meter between the individual cable spacers. Thus the cable loop will have a length of approximately fifteen metres. Such cable loop constructions can however comprise fewer or more cable spacers with smaller or larger individual distance and thus also the length of the cable loop can be smaller or larger than mentioned above.

In a preferred embodiment of a wind turbine, comprising a cable loop as mentioned, where a number of cable spacers are arranged between the cables, the cable spacers can be connected with a number of steel wires or other wire, rope, line or strap means for carrying said cable spacers. The cable spacers can be movably fixed to a number of long wires, where said wires carry more than one cable spacer, but the individual cable spacers can also be interconnected with a number of wires or other connecting means.

Such wires - long and through-going or short and interconnecting - are preferably arranged at or near the same area where the cables are supported or arranged. By having the wires more or less at the same diameter or position as the cables there will be less or zero relative movement between the cable spacers and the cables. This avoids wear between the cables and the cable spacer as the parts are moving together, when the cable loop is twisted or untwisted. In the prior art it is common to install the cables in holes in cable spacers where the cables will move up and down as the cable loop is twisted and untwisted, which over relatively short time will wear out the insulation around the conducting material on the cables.

The fingers can be extending in a radial direction from a first central area of the cable spacer, but in a preferred embodiment of a wind turbine according to the invention said fingers on said cable spacer are extending outwardly from a circumference of a centre part. The centre part can be circular or with any other geometrical shape having a circumference. A circular shape is preferred, but also a rectangular, a triangular or even a rod-like shape will work as the main thing is that a number of fingers are extending away from said central area or part. Between two fingers a space or room for one, two, three or more cables are created, where the cables are able to be held at a distance to other cables in the cable loop.

In a preferred embodiment of a wind turbine according to the invention the centre part has a circumference and a height and thus an outwardly facing surface, where said surface is convex and preferably is spherical.

By shaping this surface convex, the contact area between a cable and the cable spacer is maximized which prevents wear of the insulation jacket of the cable. One further advantage by having this convex surface on the cable spacer is that when the cable loop is twisted, the individual cables will have a tendency to lean against this surface, and thus the cables are supported on a larger surface. This is especially explicit when the cable spacers are circular or have a closed geometrical ring shape as the cables when twisted are forced towards the centre of the individual cable spacers and thus are pressed against the convex surface. The convex shape of the surface is also preventing the cable from being bent with a radius smaller than that of the convex surface, thus preventing the cable from being damaged due to too sharp bending.

In another embodiment of a wind turbine according to the invention said fingers can have a height and a radial length and thus at least a first and a second surface, said first surface facing a second surface on another finger, where said surfaces are convex and preferably spherical.

The grounds for also having the fingers with convex surfaces are the same as mentioned above, and the main advantage is less wear on the cables and controlling of the bending radius of the cables. During normal operation, where a cable loop is operated with a twist of ± 720 degrees the cable spacers can be designed and sized in order to have only a minimum contact to the surface of the cables. If the wind turbine is running with a control error, which over time has been seen more than once, that allows a twist of more than ± 720 degrees of the cable loop, it becomes really important that the cables are well supported by cable spacers that manage to keep the cables from being bent more than allowable.

This can be obtained with a wind turbine according to the invention, where said height of the centre part and/or of the fingers is more than 100 millimetres and preferably more than 200 millimetres or even larger.

Furthermore, a wind turbine according to the invention can have the mentioned convex surface or surfaces designed with a curve, where said curve has a radius of more than 100 millimetres and preferably with a radius of 200 millimetres or with an even larger radius. This will give a larger contact area between the cable spacer and a cable in a twisted and extreme situation.

In a preferred embodiment of a wind turbine according to the invention said centre part is circular and has an outside diameter, said diameter being more than 300 millimetres and preferably more than 400 millimetres, but less than 1500 millimetres. This allows a certain distance to be upheld between individual cables or bundles of cables, which helps keeping a lower temperature on the cable loop, as air can more easily be vented in and around the cable loop. At the same time it will still be possible to handle a cable spacer with this size without any mentionable trouble.

A wind turbine according to the invention comprising a cable spacer can in a preferred embodiment have fingers having a length between 30 and 200 millimetres and preferably between 50 and 150 millimetres. With fingers having the above mentioned length, a space or room with a sufficient size is created and one or more cables can be guided in such a space or room.

In yet an embodiment of a wind turbine according to the invention the cable spacer or cable spacers comprise a clamp, said clamp being a clamping band with an inner diameter substantially corresponding to the outer circumference/second diameter of said cable spacer, thus - when installed - clamping or closing all of said gaps with one clamp. With such a clamping band it is possible to close all the gaps with one single clamping band. Installation of the clamping band can easily be done, and the cables will be held in the gaps. A clamping band can be made from steel, plastic or another suitable material and it can for instance be installed at the end of the fingers or at one side of the fingers in a groove. Alternatively the clamping band can be made with some kind of collar that engages with the cable spacer and thus secures it in relation to the end of the fingers or in relation with the cable spacer.

In another embodiment of a wind turbine according to the invention said cable spacer can comprise at least one clamp, where said at least one clamp comprises means for fixating at, at least a part of the outer circumference/second diameter of said cable spacer, thus - when installed - clamping or closing one or more of said gaps with one clamp. Also such a clamping bend that only clamps one or more of the gaps can be made from steel, plastic or another suitable material and can be installed at the end of the fingers or at the side of the fingers/cable spacer via or in suitable means therefore.

The cable spacer can be manufactured from any kind of steel or plastics that possesses the needed strength. A cable spacer can e.g. be made from steel that is covered with a plastic or polymer coating or skin.

### Description of the Drawing

An embodiment of the invention will now be described, by way of example only, with reference to the accompanying drawings, in which:
- Fig. 1: shows a two bladed partial pitch wind turbine.
- Fig. 2: shows a complete cable loop arrangement for a wind turbine.
- Fig. 3: shows a cable spacer with a number of cables and a clamping band.
- Fig. 4: shows the top of a cable loop arrangement.
- Fig. 5: shows the bottom of a cable loop arrangement.
- Fig. 6: shows even more details from the bottom of a cable loop.
- Fig. 7: shows parts of two cable spacers that are twisted.

In the following text, the figures will be described one by one and the different parts and positions seen in the figures will be numbered with the same numbers in the different figures. Not all parts and positions indicated in a specific figure will necessarily be discussed together with that figure.

### Position number list

- 1: Wind turbine
- 2: Blade
- 3: Hub
- 4: Nacelle
- 5: Tower
- 6: Yaw bearing
- 7: Cable
- 8: Cable loop construction
- 9: Cable spacer
- 10: Top ring
- 11: Cable stocking
- 12: Lower cable spacer
- 13: Frame
- 14: Hinge at side wall of tower
- 15: Hinge at lower cable spacer
- 16: Central part
- 17: Convex surface on central part
- 18: Finger
- 19: Convex surface on finger
- 20: Clamping band

### Detailed Description of the Invention

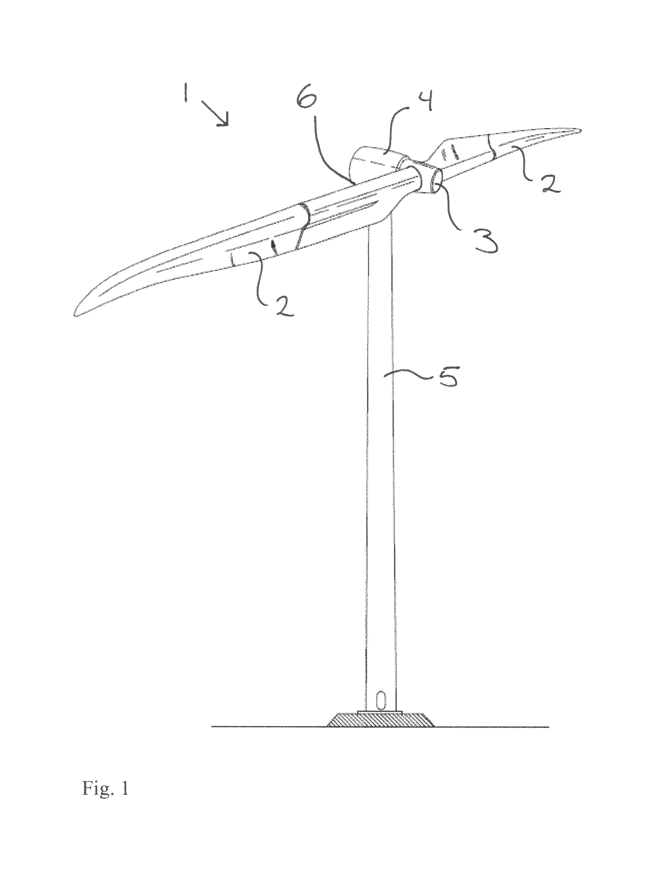

In fig. 1, a wind turbine 1 is seen, comprising two blades 2 that via a hub 3 are installed on a nacelle 4. The nacelle 4 is arranged at the top of a tower 5, and between said nacelle 4 and tower 5 there is arranged a yaw bearing 6, for rotating the nacelle 4 in relation to the tower 5. The yaw bearing 6 is not easily seen in this figure.

During normal use the wind turbine 1 is directed into the most profitable direction in relation to the wind direction and by activating some yawing equipment the direction of the nacelle 4 is adjusted on a regular basis. Over time the nacelle 4 can be turned or twisted more than once or twice if not controlled. As the nacelle 4 contains different electrical equipment, e.g. a generator, a number of electrical power cables 7 and/or other cables 7 are arranged between the nacelle 4 and the tower 5.

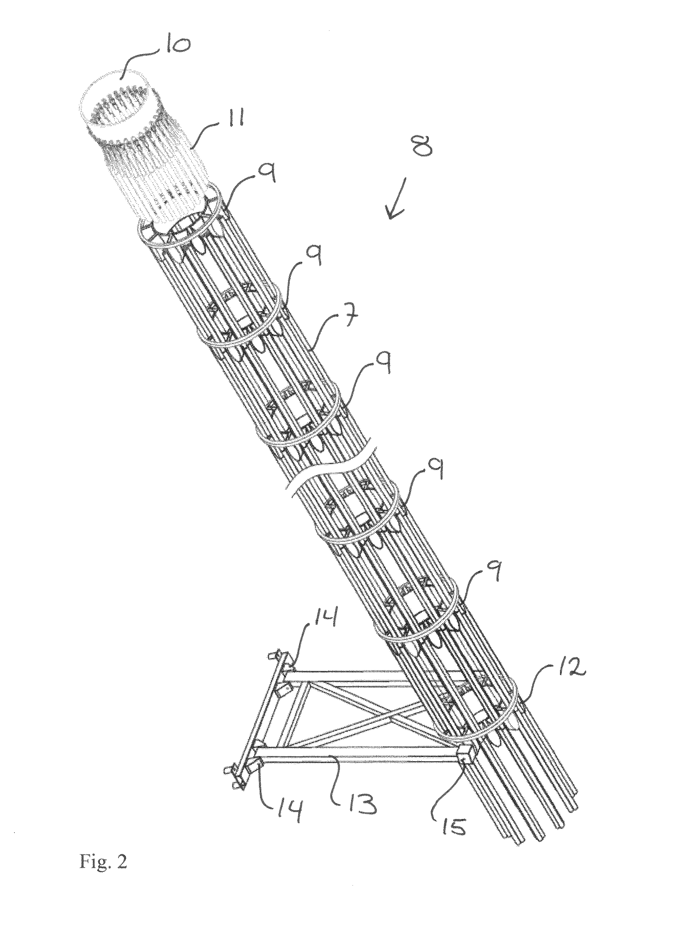

These cables 7 are arranged in a so-called cable loop 8 as seen in fig. 2 in order to prevent the cables 7 from being twisted into disorder. Typically a nacelle 4 is allowed to turn or twist ± 720 degrees, which equals two full revolutions of the nacelle 4 in each direction. The cable loop 8 comprises a number of cable spacers 9 arranged at a certain distance along the cables 7. At the top of the cable loop 8 a top ring 10 is seen, where all the individual cables 7 are hanging from. The cables 7 are arranged or fixed in so-called cable stockings 11, via which they can hang from the mentioned top ring 10. At the bottom of the cable loop construction 8 the lowermost cable spacer 12 is seen. This lower cable spacer 12 is fixed against rotation and is only allowed to move up and down as it is held in position by a frame 13. The frame 13 is installed to the internal side wall of the tower 5 with a hinge 14 at the side wall of the tower 5 and also with a hinge 15 at the lowermost cable spacer 12.

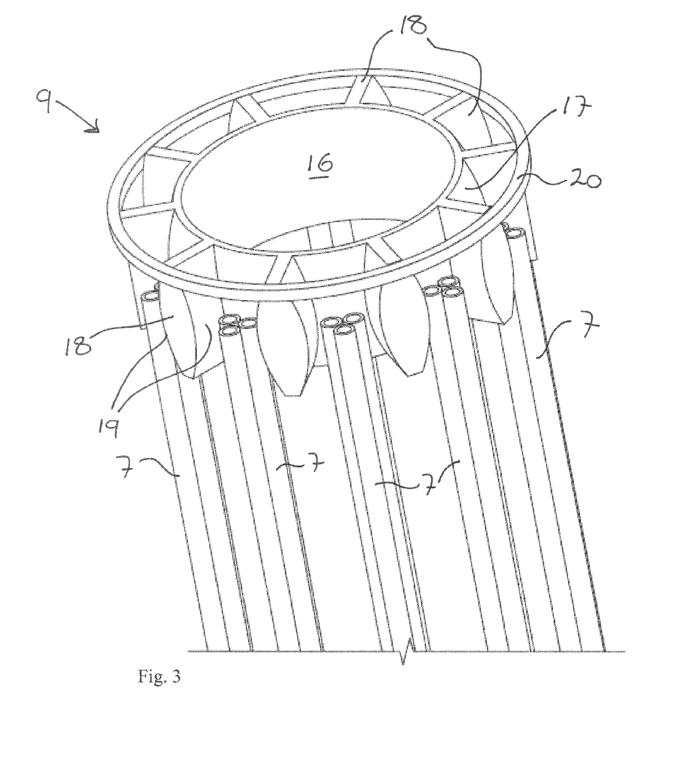

In fig. 3 a cable spacer 9 is seen in detail. The cable spacer 9 has a circular central part 16 with an outwardly facing convex surface 17, from which a number of fingers 18 extend in a radial direction. As can be seen in the figure the fingers 18 have a certain radial length and two opposing convex surfaces 19. The area delimited by two fingers 18 is called a gap, and in the gaps bundles comprising three cables 7 are positioned. At the top of said cable spacer 9 a clamping band 20 is installed at the outer circumference of the cable spacer 9. This clamping band closes the gaps and secures the cables 7 in the gaps.

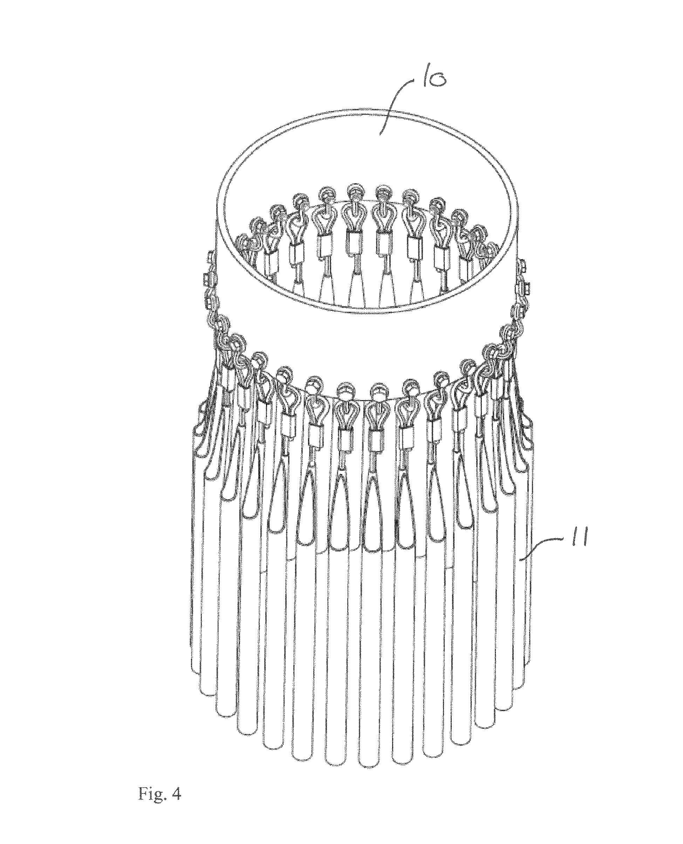

Fig. 4 shows in detail the top ring 10 and the cable stockings 11. The top ring 10 will be installed at a main structure in the nacelle 4, and will thus be rotated together with the nacelle whenever an adjustment of the yaw system is performed. From the cable stockings 11 the not shown cables 7 are directed to their installation position in the nacelle 4.

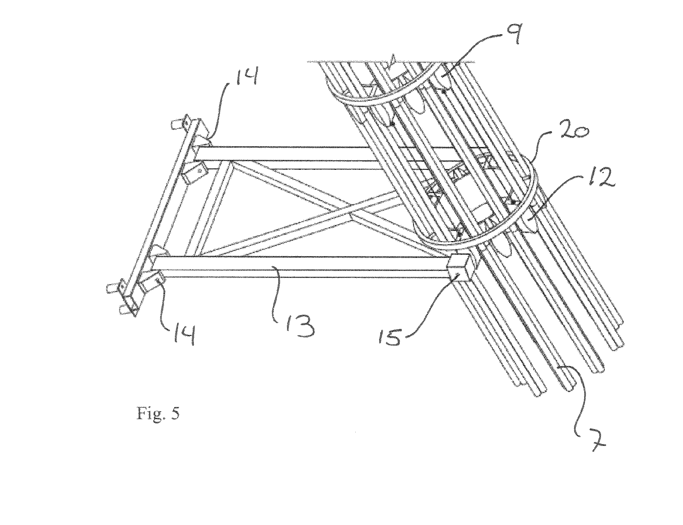

In fig. 5 details of the frame 13 at the bottom of the cable loop construction 8 are seen as also depicted in figure 2. As the lowermost cable spacer 12 is fixed against rotation and as the top ring 10 is fixed to the main structure at the nacelle 4 all the cable spacers 9 will be rotated/twisted as the nacelle 4 is yawed.

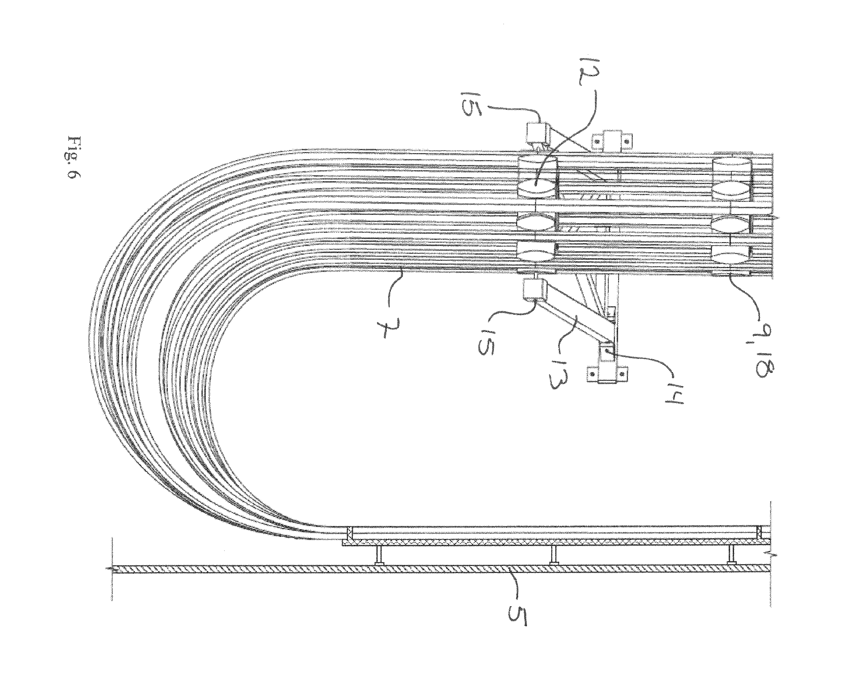

Fig. 6 shows the bottom part of the cable loop 8 from a different angle as seen in fig. 5, and further it is shown how the cables 7 are guided to the inside of the tower 5 and converted into a fixed cabling at the non-movable structure of the wind turbine 1.

If the nacelle 4 for instance is yawed 720 degrees, and the cable loop comprises thirteen cable spacers 9 installed along the cable loop construction 8 with a uniform distance, each cable spacer 9 will experience a twist of 720/12 = 60 degrees. Depending on the diameter of and the distance between the cable spacers 9 the angle of twist in a cable will vary. If the cable spacers with a central part 16, having an outer diameter of 500 millimetres are installed with a distance of 1000 millimetres, and the cable loop 8 comprises thirteen cable spacers 9, the angle of twist or inclination that the cable 7 will see is approximately 15 degrees.

Circumference of the central part having a diameter of 500 millimetres:
500 x π = approx. 1571 millimetres

Distance that one cable spacer is rotated in relation to another, when rotated 60 degrees -> corresponding to 1/6 of a full rotation:
1571 / 6 = approx. 262 millimetres
Tan a=262 / 1000 → a= approx. 15 degrees

This is however an assumption as the calculation is performed in only two dimensions and not in three dimensions, which will of course make a small difference.

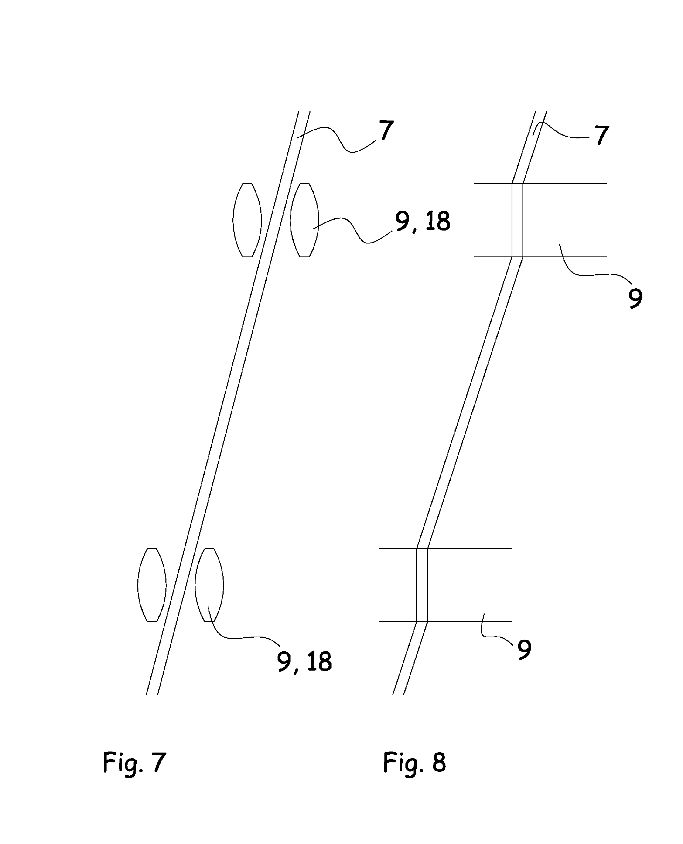

In fig. 7 the above calculation is rendered as a drawing. Two cable spacers 9 are seen where a twist of 60 degrees is made visual by moving the top cable spacer to the right. In the drawing the cable spacer has been drawn with a radius of the convex surface on the fingers 18 of 200 millimetres and the height of the fingers 18 / cable spacer 9 is also 200 millimetres. The thickness of the fingers 18 then becomes approximately 78 millimetres leaving a gap for the cable 7 between the fingers 18 of approximately 79 millimetres. The cable 7 in fig. 7 is drawn with a diameter of 30 millimetres, and the distance between the two cable spacers 9 is 1000 millimetres. The inclination of the cable is approximately 15 degrees as calculated above. From this figure it becomes clear that the cable 7 will be exposed to nearly no bending during a full twist of 720 degrees of the cable loop construction 8.

In comparison with the invention fig. 8 shows a prior art solution where a cable 7 is fixed to two cable spacers 9 with a ring-shape and with a height of 200 millimetres, a diameter of 500 millimetres and a distance of 1000 millimetres. The cable 7 has a thickness of 30 millimetres and is rigidly fixed to the cable spacers 9. In this solution it is clearly seen that the cable 7 suffers from two bends at each cable spacer 9, due to the rigid fixation. This will over time destroy or damage the cable and an expensive exchange or repair of cables have to take place, with down time and other costs as a result.

The invention is not limited to the embodiments described herein, and may be modified or adapted without departing from the scope of the present invention as described in the patent claims below.

## Claims

1. A wind turbine (1) comprising at least a nacelle (2), said nacelle (2) being installed on top of a generally vertical tower (3) via a yaw bearing (4), where said yaw bearing (4) offers the possibility of turning said nacelle (2) in relation to said tower (3), said wind turbine (1) further having a number of cables, e.g. electrical power cables (5) extending from said nacelle (2) and down into said tower (3), where the cables (5) are arranged in a cable loop construction (6), said cable loop construction (6) comprising a number of cable spacers (7) where the cable spacers (7) comprise a number of fingers (18), said fingers (18) extending in a substantially radial direction from a first position/diameter (16) to an outer circumference/second diameter at said cable spacer (9), thus forming a number of gaps between said fingers (18), where said fingers (18) on said cable spacer (9) are extending outwardly from a circumference of a centre part (16), **characterised in that** said centre part (16) has a circumference and a height and thus an outwardly facing surface (17), where said surface (17) is convex and preferably spherical.

2. A wind turbine (1) according to claim 1, **characterised in that** said fingers (18) has a height and a radial length and thus at least a first and a second surface (19), said first surface (19) facing a second surface (19) on another finger (18), where said surfaces (19) is convex and preferably spherical.

3. A wind turbine (1) according to any of the claims 1 to 2, **characterised in that** said height is more than 100 millimetres and preferably more than 200 millimetres or even larger.

4. A wind turbine (1) according to any of the claims 1 to 3, **characterised in that** said convex surface or surfaces (17, 19) are curved with a radius of more than 100 millimetres and preferably with a radius of 200 millimetres or with an even larger radius.

5. A wind turbine (1) according to any of the claims 1 to 4, **characterised in that** said centre part (16) has an outside diameter, said diameter being more than 300 millimetres and preferably more than 400 millimetres, but less than 1500 millimetres.

6. A wind turbine (1) according to any of the claims 1 to 5, **characterised in that** said fingers (18) has a length between 30 and 200 millimetres and preferably between 50 and 150 millimetres.

7. A wind turbine (1) according to any of the claims 1 to 6, **characterised in that** said cable spacer (9) comprises a clamp (20), said clamp (20) being a clamping band (20) with an inner diameter substantially corresponding to the outer circumference/second diameter of said cable spacer (9), thus - when installed - clamping or closing all of said gaps with one clamp (20).

8. A wind turbine (1) according to any of the claims 1 to 6, **characterised in that** said cable spacer (9) comprises at least one clamp (20), where said at least one clamp (20) comprises means for fixating at, at least a part of the outer circumference/second diameter of said cable spacer (9), thus - when installed - clamping or closing one or more of said gaps with one clamp (20).
